# EUROPEAN PATENT SPECIFICATION

(11) **EP 1 631 440 B1**
(45) Date of publication and mention of the grant of the patent: **29.08.2007**
(21) Application number: 04736218.1
(22) Date of filing: 07.06.2004
(51) Int. Cl.: B29C 67/00

(54) **APPARATUS FOR MANUFACTURING THREE DIMENSIONAL ITEMS**
VERFAHREN ZUR HERSTELLUNG DREIDIMENSIONALEN FORMTEILEN
APPAREIL PERMETTANT DE FABRIQUER DES ARTICLES TRIDIMENSIONNELS

(30) Priority: 05.06.2003 GB 0312909
(43) Date of publication of application: 08.03.2006
(73) Proprietor: THE UNIVERSITY OF LIVERPOOL, Liverpool L69 3BX (GB)
(72) Inventor: SUTCLIFFE, Christopher, University of Liverpool, Liverpool L69 3GH (GB)
(74) Representative: Bartle, Robin Jonathan
(86) International application number: PCT/GB2004/002411
(87) International publication number: WO 2004/108398

(56) References cited:
- EP-A- 1 358 994
- US-A- 5 637 175
- PATENT ABSTRACTS OF JAPAN vol. 0080, no. 61 (M-284), 23 March 1984 (1984-03-23) & JP 58 211413 A (KOGYO GIJUTSUIN; others: 0J), 8 December 1983 (1983-12-08)

## Description

The present invention relates to an apparatus for manufacturing three dimensional items from multiple layers of material.

A group of manufacturing techniques has been developed in recent years which are collectively referred to as "rapid prototyping" techniques. The same processes are sometimes known as "freeform fabrication" or "layer manufacturing". They allow complex three dimensional items to be automatically fabricated based on a computer representation of the item. The item is built up from a succession of thin layers of material which are formed under computer control and disposed one upon the other. The computer representation of the item can for example be generated using a CAD (computer aided design) package. The computer analyses the representation to produce what is in effect a contour map of the item. That is, the computer calculates the sectional shape, or contour, of the item in a series of parallel but separate planes. The rapid prototyping machine then forms, one upon another, layers of a build material having the required thickness (equal to the notional separation of the planes in the computer analysis) and also the required shape. In this way an item having the required shape is built up.

In the majority of existing rapid prototyping machines formation of each shaped layer involves:-
(1) forming upon the item under manufacture a layer of build material of controlled depth. The build material is typically in liquid or powder form at this stage and may for example be applied from a reservoir or hopper, with layer depth being regulated by a doctor blade or roller moved across the layer surface.
(2) applying a phase change method ("PCM") to solidify or fuse the material in selected regions to produce the required shape.

Such techniques include :-
(a) *stereolithography,* in which the item is built up in a bath of photosensitive polymer or resin which can be solidified by means of a light source, which may be a laser or digital light projection system. A build platform within the bath supports the item under manufacture. The laser scans a layer of liquid above the item to selective solidify it. The platform is then moved downwards in the bath and the scanning process repeated.
(b) *powder binding,* in which a layer of material is spread from a hopper and a binder solution is "printed" (deposited) from a scanning head onto the powder material to cause the powder to cohere. The printing head used for this process can be very similar to the head of a conventional ink jet printer. Again the build platform is moved downwards between formation of successive layers to accommodate the increasing depth of the item. The printer head is moved across the item to enable the "scanning" necessary for printing. A similar technique is in use for manufacture of certain pharmaceutical tablets, the active ingredient, along with a binder, being selectively printed onto a powder layer. Carefully controlled tablet characteristics, such as release rates, can be achieved.
c) *powder melting,* e.g. by selective application of laser light ("selective laser melting"). Metal powders have even been used in this type of process to form a solid metal part, a process referred to as *selective laser sintering.*
(d) *electron beam melting,* in which multiple electron beams selectively melt deposited powder to form solid material. The process is carried out under vacuum. In some instances the "build chamber" in which the process is carried out is heated.

There are also rapid prototyping techniques which do not involve formation of a uniform layer followed by a selective phase change. Instead the build material may be selectively deposited. In *wax extrusion,* wax micro droplets are fired from an ink jet style print head to "print" successive laminae making up the item. In *multi-jet modeling* a raster style print head ejects thermo-polymer material to build up the item. The above list of techniques is not exhaustive. All are familiar to those skilled in the art of rapid prototyping and are commercially available.

Rapid prototyping has been used, precisely as its name suggests, particularly for the fabrication of pre-production models, test items and so on. The current techniques are not well suited to production of items in larger volumes, particularly because they are slow. A single build process typically takes some hours due to the large number of layers which are required and the length of time required to form each layer. Rapid prototyping techniques can be used in manufacture of tooling for more conventional, volume production, techniques such as injection moulding and casting.

However there is now a recognized commercial need to move from rapid prototyping to "rapid manufacture" in which the layer on layer approach used in rapid prototyping is applied to the manufacture of components in larger batch sizes. Such techniques offer the potential to fabricate components which cannot be made by moulding (there being no need to release the manufactured item from a mould, rapid manufacturing techniques are less limited in the range of shapes which can be manufactured than moulding) and whose shape can be modified without the need for replacement tooling. Rapid manufacturing is thus potentially an enormously flexible and useful technology. One goal of such technology is to provide so-called "mass customisation".
Cost and speed of manufacture currently limit the application of rapid manufacturing techniques to certain high margin, low volume fields including racing car components, custom hearing aids, dental aligners, spacecraft components and micro parts. As noted above, controlled release oral dosages of pharmaceuticals are also being prepared using techniques of the above described types. Increases in the speed of manufacture (the number of items manufactured per hour) are highly important in bringing rapid manufacture to a wider range of markets.

The devices used to deposit material and / or cause the selective phase change are normally reciprocally driven, moving back and forth across the item under manufacture. The present inventor has recognized that such techniques limit the speed of existing rapid prototyping and rapid manufacturing techniques.

During prosecution of the present application, the European Patent Office drew particular attention to US patent 5 637 175 A (Feygin Michael et al) which discloses the features as defined in the preamble of claim 1. This relates to manufacturing apparatus for forming an integral three-dimensional object from individually contoured laminations, the apparatus having a circular powder carrying platform which is driven to rotate. A powder container, roller and printing device are used to continuously flow powder onto a cylindrical laminate, to compress the powder and to scan it to produce a solid object. The circular platform is continuously lowered as the thickness of the cylindrical laminate spirally increases.

The European Patent Office also drew attention to Patent Abstracts of Japan vol. 0080, no. 61 (M-284), 23 March 1984 (1984-03-23) &; JP 58 211413 A. This concerns a device for solid model production in which forming agent, which solidifies in a short time after being jetted in the air, is jetted from a nozzle on an artificial arm in association with the rotation of a turntable, and raked smooth by means of forming pins, the protruded length of which are controllable at the tip of the artificial arm, before the solidification of the forming agent.

In accordance with the present invention there is an apparatus for manufacturing three dimensional items, the apparatus comprising a computer controller (36), a build platform for carrying an item under manufacture, and a build station (4) for forming upon the item a layer of material having a controlled depth and a shape determined by the computer controller, wherein either of the build station (4) and the build platform is mounted and driven such as to rotate about an axis, so that the surface of the item under manufacture is repeatedly presented to the build station (4), enabling an item having a chosen three dimensional shape to be built up of multiple layers of material, the apparatus being characterised in that it comprises at least two build stations circumferentially spaced about the rotational axis so that in one rotation at least two layers are added to the item under manufacture.

The rotational motion of the build station relative to the build platform (which may result from rotation of one or the other, or could conceivably result from rotation of both) dispenses with the need for reciprocal motion of the build station.

The use of multiple build stations is made possible by the rotational movement of the build station relative to the build platform and makes it possible to form two or more layers in each rotation. As many layers are applied as there are build stations. Hence the present invention makes it possible to have multiple build stations operating concurrently and the build process is thus more rapid.

In order to accommodate the increasing depth of the item under manufacture resulting from formation of successive layers thereupon, either the build station or the build platform is preferably moved along the rotational axis. Again, what is necessary is that the station and the platform should move relative to (away from) each other, but this can be achieved by moving one or the other, or conceivably both.

This movement along the rotational axis must be coordinated with the rotational movement. In a particularly preferred embodiment of the present invention this coordination is achieved using a screw threaded member, either of the build station and the build platform being rotatably engaged with the screw thread such as to be moved therealong by virtue of the rotational movement. The screw threaded member is preferably arranged to extend along the rotational axis.

The movement along the axis required upon a single rotation is typically small, since the depth of each layer of material is also small. Rather than use a screw thread of exceedingly fine pitch, in a preferred embodiment of the present invention the screw threaded member is itself rotatably mounted and driven to reduce the rate of the said movement along the rotational axis.

It has been conventional in rapid prototyping and manufacturing machines to keep the build platform - and so the item under manufacture - stationary and to move the build station. However in a preferred embodiment of the present invention it is the build platform which is rotated. A static build station may thus be used and this allows for improvements in build quality. In the case of powdered build material, finer powders may be used as a result.

A specific embodiment of the present invention will now be described, by way of example only, with reference to the accompanying drawings, in which:-
Figure 1 is a perspective illustration of a rapid manufacturing machine according to the present invention;
Figure 2 is similar to Figure 1 except that a mounting plate and associated build stations are omitted from the drawing to reveal other aspects of the machine's construction;
Figure 3 is a perspective illustration of one of the machine's build stations shown upright and viewed from one side;
Figure 4 is another perspective illustration of the build station, but viewed from beneath;

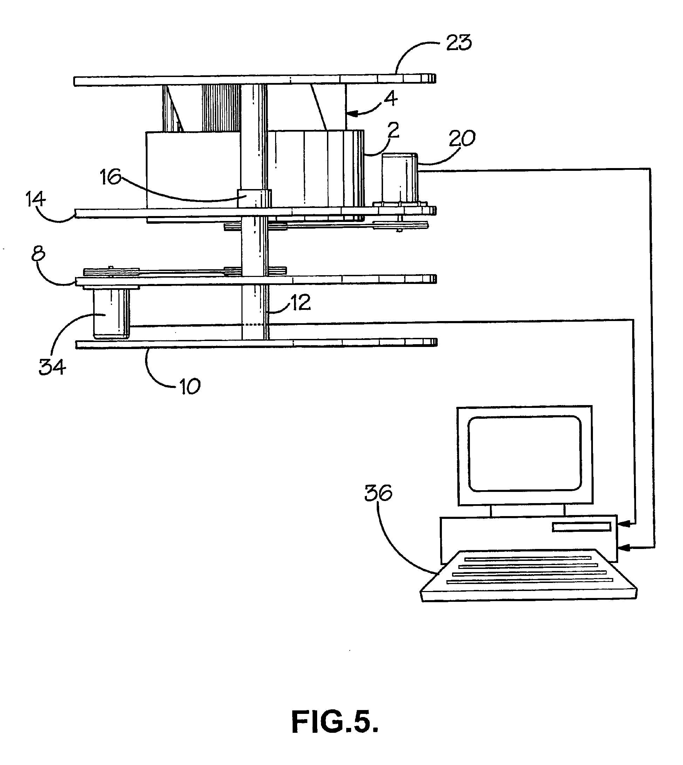

Figure 5 is a side elevation of the machine; and

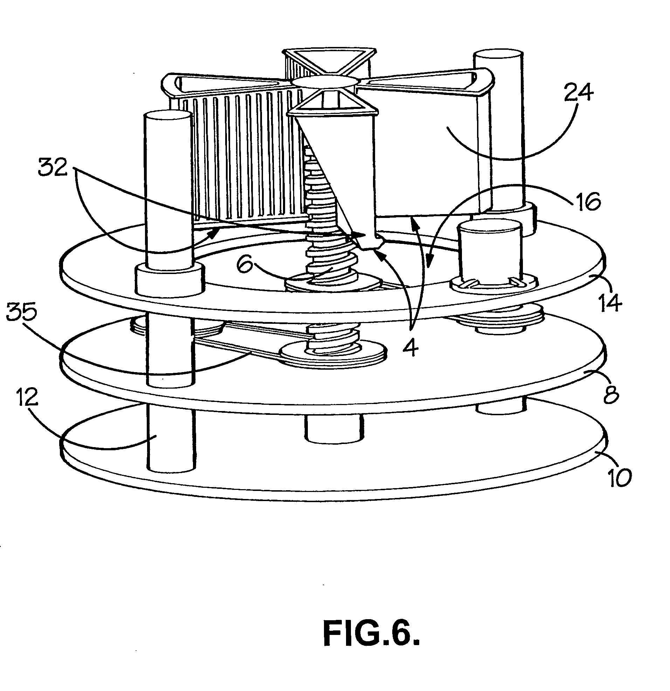

Figure 6 is a further perspective illustration of the machine, a build chamber and mounting plate being omitted from this drawing.

Before considering the construction of the machine in detail, note that it comprises a build chamber 2, formed with a cylindrical wall and a flat planar base serving as a build platform, in which items are fabricated, the build chamber being rotatable to move the items repeatedly past build stations 4 by means of which the layers making up the item are deposited and selectively solidified. This particular machine is of the "powder binding" type but it must be understood that the present invention is considered to be potentially applicable to most types of rapid prototyping/manufacturing techniques, including all of those referred to above. Note also that the build chamber 2 is coupled to a lead screw 6 and is thereby caused to move, as it rotates, along the direction of the screw axis (referred to herein as the "z axis", which is also the axis about which the build chamber 2 rotates). This motion along the z axis allows the increasing depth of the items to be accommodated as successive layers are formed upon them.

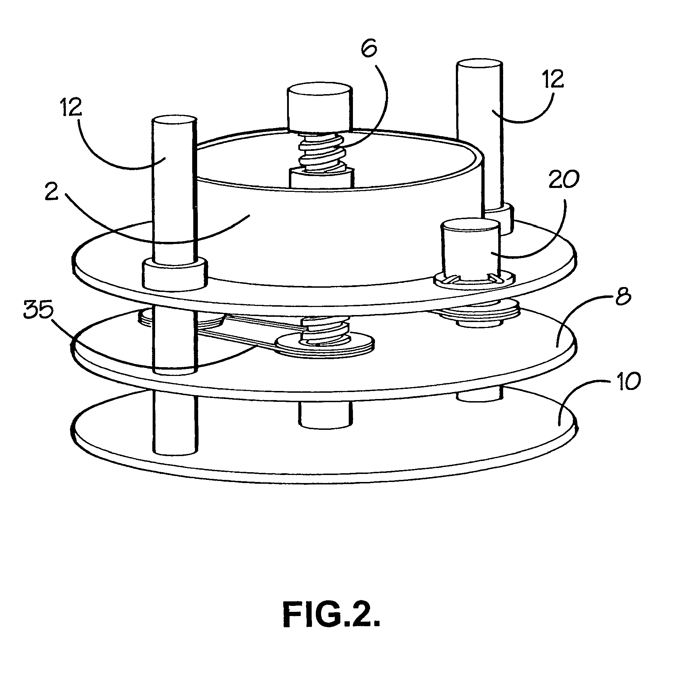

Looking now at the detail of the machine's construction, upper and lower base plates 8, 10 are rigidly coupled to, and serve to support, two upstanding guide pillars 12, aligned parallel to the z axis, upon which slides a support plate 14. Sleeves 16 attached to the support plate run on the guide pillars and assist in ensuring that, while the support plate is able to slide along the guide pillars in order to move in the z direction, its position in the x and y directions, as well as its perpendicular orientation to the z axis, are fixed. The support plate 14 is circular and has a central, circular cutout 16 which receives the build chamber 2, permitting the chamber to rotate about the z axis In Figure 2 it can be seen that the build chamber 2 has a central boss 18 which embraces the lead screw 8. The boss is internally screw threaded so that as the build chamber rotates it is automatically moved along the z direction. The build chamber is provided with a rotational drive arrangement which in the illustrated embodiment comprises a chamber drive motor 20 acting through a belt drive indicated at 22.

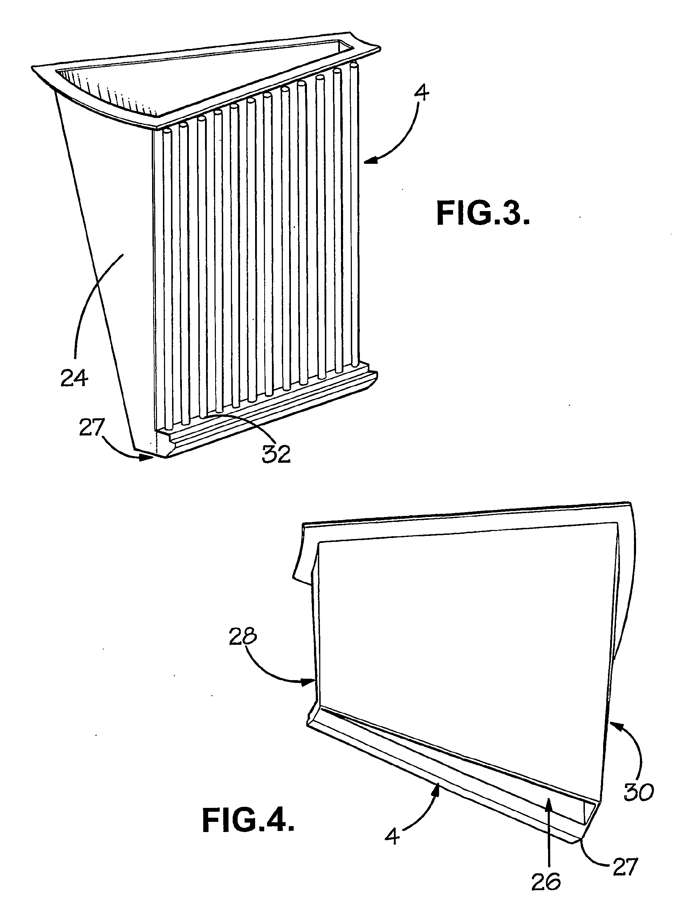

Above the build chamber is a mounting plate 23 rigidly coupled to the guide pillars 12 which carries the build stations 4. Each build station forms a layer upon the item being manufactured as it passes therebeneath. The build stations are separated from each other along the circumferential direction. In the illustrated embodiment there are four build stations. In a single revolution each item thus receives four layers of material. A single build station is illustrated in Figures 3 and 4, it comprises a hopper 24 which is upwardly open to receive the build material, which in this embodiment takes the form of a powder. The hopper 24 also has a downwardly open, constricted mouth 26 through which powder is dispensed. To control the depth of the resulting powder layer, a doctor blade is used, in the front of a straight edge 27 lying parallel to the bottom of the build chamber and adjacent the dispensing mouth 26. Because the item being manufactured moves along a circular path, the speed of movement of its surface past the hopper 24 is not the same over the entire surface but is instead proportional to distance from the axis of rotation. Consequently the rate of powder deposition required to achieve a uniform layer depth likewise increases with distance from the axis. To provide the required variation flow rate, the hopper 24 and mouth 26 broaden from their radially inner end 28 to their outer end 30. Selective phase change in the powder is achieved in this embodiment using a print head 32 of ink jet type which ejects a binder onto the items to define the shape of the built layer.

To keep the uppermost surface of the items under manufacture a consistent vertical distance from the build stations, it is necessary to advance the build chamber 2 (and the support plate 14 on which it is mounted) along the z axis by a distance equal to the layer thickness, each time the item passes a build station. A layer thickness of the order of 0,05mm is typical in known rapid prototyping techniques- Hence in the illustrated embodiment the chamber would advance 0.05 mm as it rotates through 90 degrees (to move from one of the build stations 4,6 to the next) and through 0.2 mm. in a full rotation. If the lead screw 6 were fixed, this would necessitate use of a screw with a 0.2 mm. pitch. A screw with such a fine pitch is thought to be difficult to obtain.

In the illustrated embodiment the lead screw 6 is provided with its own drive comprising a screw drive motor 34 acting through a belt drive 35. The lead screw 6 is thereby driven to rotate in the same direction as the build chamber 2 but at a different speed, and the rate of advance of the build chamber is thus controlled by the difference in rotational speeds of the chamber 2 and screw 6. For example if the lead screw rotates at half the speed of the build chamber, then the chamber advances half the pitch of the screw thread in each rotation. The arrangement not only removes the need for an excessively fine pitched thread on the lead screw but also allows the rate of advance of the build chamber to be adjusted, by changing the speed of the lead screw 6 and/or chamber 2. The depth of each layer of build material may thereby likewise be varied. In the illustrated embodiment the two drive motors 20, 34 are electronically controlled allowing their relative speeds - and hence the layer depth - to be varied by the computer controller 36. An alternative (not illustrated) would be to link the build chamber and lead screw through a gear chain or other mechanical drive (such as a belt and pulley), in which case the layer depth would be controlled by the screw pitch and drive ratio.

The machine may operate continuously or intermittently. That is, the rotation of the build chamber may be continuous or may be periodically halted or slowed. Continuous operation is faster since layering and phase change operations are carried out at the same time. However where the invention is implemented using certain phase change methods, particularly laser-based methods, the phase change operation proceeds more slowly than the layer deposition. Intermittent operation, in which the rotation of the build chamber 2 stops or is slowed during phase change, permits the use of relatively slow phase change methods.

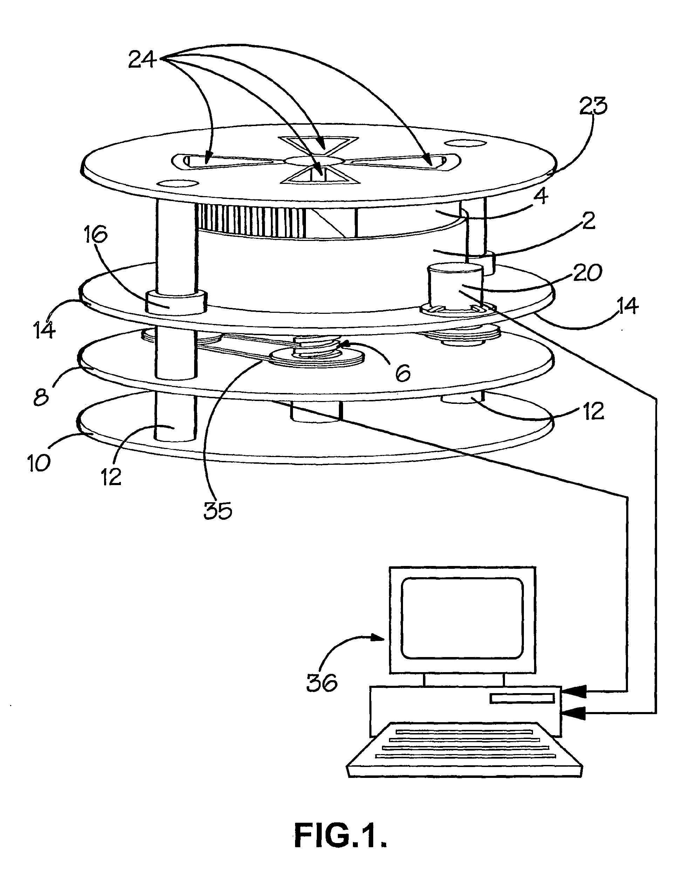

The computer controller 36 (Figure 1) is connected to the motors 20, 28 and also to the phase change stations and controls both.

In the above described embodiment the functions of build deposition and phase change are carried out by unitary build stations. However these two functions may be carried out by separate powder deposition and phase change stations, separated from each other along the circumferential direction. Also different build stations may be loaded with different build materials, enabling incorporation of two or more materials into the structure of the finished item.

It must be understood that the present invention is potentially applicable to any of the above described types of rapid prototyping and rapid manufacturing machines, and to other machines using the layer-on -layer fabrication technique.

## Claims

1. An apparatus for manufacturing three dimensional items, the apparatus comprising a computer controller (36), a build platform for carrying an item under manufacture, and a build station (4) for forming upon the item a layer of material having a controlled depth and a shape determined by the computer controller, wherein either of the build station (4) and the build platform is mounted and driven such as to rotate about an axis, so that the surface of the item under manufacture is repeatedly presented to the build station (4), enabling an item having a chosen three dimensional shape to be built up of multiple layers of material, the apparatus being **characterised in that** it comprises at least two build stations circumferentially spaced about the rotational axis so that in one rotation at least two layers are added to the item under manufacture.

2. An apparatus as claimed in claim 1 wherein either of the build station (4) and the build platform is moved along the rotational axis in order to accommodate the increase in depth of the item under manufacture resulting from formation of successive layers thereupon.

3. An apparatus as claimed in claim 2 further comprising a screw threaded member (6) with which either of the build platform and the build station (4) is rotatably engaged in order to produce the aforementioned movement along the rotational axis.

4. An apparatus as claimed in claim 3 wherein the screw threaded member (6) extends along the rotational axis.

5. An apparatus as claimed in claim 3 or claim 4 wherein the screw threaded member (6) is itself rotatably mounted and is driven such as to reduce the rate of said movement along the rotational axis.

6. An apparatus as claimed in any preceding claim wherein it is the build platform which is rotated.

7. An apparatus as claimed in claim 6 wherein it is the build platform which is moved along the axis of rotation.

8. An apparatus as claimed in claim 7 wherein the build platform is coupled to a support through a rotary bearing which provides for the build platform's rotational motion, the support being slidably mounted enabling the support and the build platform to move together along the rotational axis.

9. An apparatus as claimed in claim 8 wherein the support is slidably engaged with at least one pillar extending along the direction of the rotational axis.

10. An apparatus as claimed in any preceding claim wherein each build station comprises a deposition station (24) for depositing a layer of build material and a phase change station (32) for selectively changing the phase of the layer of build material to form in it the shape determined by the computer controller.

11. An apparatus as claimed in any preceding claim wherein the two build stations (4) are loaded with different build materials.

## Patentansprüche

1. Vorrichtung zum Herstellen von dreidimensionalen Artikeln, wobei die Vorrichtung Folgendes umfasst: ein Computersteuergerät (36), eine Fertigungsplatte zum Tragen eines in Herstellung befindlichen Artikels und eine Fertigungsstation (4) zum Formen einer Materialschicht auf dem Artikel, die eine geregelte Tiefe und eine vom Computersteuergerät bestimmte Form hat, wobei entweder die Fertigungsstation (4) oder die Fertigungsplatte so montiert und angetrieben ist, dass sie sich um eine Achse dreht, so dass die Oberfläche des in Herstellung befindlichen Artikels wiederholt zur Fertigungsstation (4) gebracht wird, was das Aufbauen eines Artikels mit einer gewählten dreidimensionalen Form aus mehreren Materialschichten ermöglicht, wobei die Vorrichtung **dadurch gekennzeichnet ist, dass** sie wenigstens zwei Fertigungsstationen umfasst, die umfangsmäßig um die Drehachse beabstandet sind, so dass in einer Drehung wenigstens zwei Schichten zu dem in Herstellung befindlichen Artikel hinzugefügt werden.

2. Vorrichtung nach Anspruch 1, bei der entweder die Fertigungsstation (4) oder die Fertigungsplatte entlang der Drehachse bewegt wird, um der Zunahme der Tiefe des in Herstellung befindlichen Artikels, die durch die Bildung aufeinanderfolgender Schichten darauf bedingt ist, gerecht zu werden.

3. Vorrichtung nach Anspruch 2, ferner umfassend ein Schraubgewindelement (6), mit dem entweder die Fertigungsplatte oder die Fertigungsstation (4) drehbar in Eingriff ist, um die oben erwähnte Bewegung entlang der Drehachse zu erzeugen.

4. Vorrichtung nach Anspruch 3, bei der das Schraubgewindeelement (6) entlang der Drehachse verläuft.

5. Vorrichtung nach Anspruch 3 oder Anspruch 4, bei der das Schraubgewindeelement (6) selbst drehbar montiert ist und so angetrieben wird, dass es die Geschwindigkeit der genannten Bewegung entlang der Drehachse verringert.

6. Vorrichtung nach einem der vorhergehenden Ansprüche, bei der es die Fertigungsplatte ist, die gedreht wird.

7. Vorrichtung nach Anspruch 6, bei der es die Fertigungsplatte ist, die entlang der Drehachse bewegt wird.

8. Vorrichtung nach Anspruch 7, bei der die Fertigungsplatte durch ein Drehlager, das für die Drehbewegung der Fertigungsplatte sorgt, mit einem Träger verbunden ist, wobei der Träger gleitfähig montiert ist, so dass der Träger und die Fertigungsplatte sich zusammen entlang der Drehachse bewegen können.

9. Vorrichtung nach Anspruch 8, bei der der Träger gleitfähig mit wenigstens einer Säule in Eingriff ist, die entlang der Richtung der Drehachse verläuft.

10. Vorrichtung nach einem der vorhergehenden Ansprüche, bei der jede Fertigungsstation eine Aufbringungsstation (24) zum Aufbringen einer Fertigungsmaterialschicht und eine Phasenwechselstation (32) zum selektiven Wechseln der Phase der Fertigungsmaterialschicht, um sie in der vom Computersteuergerät bestimmten Gestalt auszubilden, umfasst.

11. Vorrichtung nach einem der vorhergehenden Ansprüche, bei der die zwei Fertigungsstationen (4) mit verschiedenen Fertigungsmaterialien geladen sind.

## Revendications

1. Appareil permettant de fabriquer des articles tridimensionnels, l'appareil comprenant un contrôleur d'ordinateur (36), une plate-forme de construction servant à porter un article en cours de fabrication, et un poste de construction (4) servant à former, sur l'article, une couche de matériau ayant une profondeur contrôlée et une forme lesquelles sont déterminées par le contrôleur d'ordinateur, cas dans lequel soit le poste de construction (4) soit la plate-forme de construction est monté et entraîné de sorte à tourner autour d'un axe, de telle sorte que la surface de l'article en cours de fabrication est présentée de façon répétée au poste de construction (4), ce qui permet à un article ayant une forme tridimensionnelle choisie d'être constitué de multiples couches de matière, l'appareil étant **caractérisé en ce qu'**il comprend au moins deux postes de construction lesquels sont espacés dans le plan circonférentiel autour de l'axe de rotation de telle sorte que, lors d'une rotation, au moins deux couches sont ajoutées à l'article en cours de fabrication.

2. Appareil, selon la revendication 1, dans lequel soit le poste de construction (4) soit la plate-forme de construction est déplacé le long de l'axe de rotation afin de tenir compte de l'augmentation de la profondeur de l'article en cours de fabrication, augmentation qui résulte de la formation de couches successives sur celui-ci.

3. Appareil, selon la revendication 2, comprenant en outre un élément fileté (6) avec lequel soit la plate-forme de construction soit le poste de construction (4) est engagé de façon rotative afin de procurer le mouvement susmentionné le long de l'axe de rotation.

4. Appareil, selon la revendication 3, dans lequel l'élément fileté (6) se prolonge le long de l'axe de rotation.

5. Appareil, selon la revendication 3 ou la revendication 4, dans lequel l'élément fileté (6) est lui-même monté de façon rotative et est entraîné de sorte à réduire la vitesse dudit mouvement le long de l'axe de rotation.

6. Appareil, selon l'une quelconque des revendications précédentes, dans lequel c'est la plate-forme de construction qui est soumise à une rotation.

7. Appareil, selon la revendication 6, dans lequel c'est la plate-forme de construction qui est déplacée le long de l'axe de rotation.

8. Appareil, selon la revendication 7, dans lequel la plate-forme de construction est couplée à un support par l'intermédiaire d'un palier rotatif qui assure le mouvement de rotation de la plate-forme de construction, le support étant monté de façon coulissante ce qui permet au support et à la plate-forme de construction de se déplacer ensemble le long de l'axe de rotation.

9. Appareil, selon la revendication 8, dans lequel le support est engagé de façon coulissante avec au moins une colonne laquelle s'étend le long du sens de l'axe de rotation.

10. Appareil, selon l'une quelconque des revendications précédentes, dans lequel chaque poste de construction comprend un poste de dépôt (24) servant à déposer une couche de matériau de construction ainsi qu'un poste de changement de phase (32) servant à changer de façon sélective la phase de la couche de matériau de construction afin d'y façonner la forme déterminée par le contrôleur d'ordinateur.

11. Appareil, selon l'une quelconque des revendications précédentes, dans lequel les deux postes de construction (4) sont chargés de matériaux de construction différents.
